(19)

Europäisches
Patentamt
European
Patent Office
Office européen
des brevets

(11)  **EP 3 703 212 A1**

(12)  **EUROPEAN PATENT APPLICATION**

(43) Date of publication:
02.09.2020  Bulletin 2020/36

(51) Int Cl.:
*H02J 3/18* (2006.01)          *H01F 27/34* (2006.01)
*H01F 38/16* (2006.01)

(21) Application number: 20159318.3

(22) Date of filing: 25.02.2020

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  27.02.2019  RU 2019105542

(71) Applicant: **Zakrytoe Aktsionernoe Obschestvo
"ES-Leasing"
Moscow 117405 (RU)**

(72) Inventors:
• **SHMID, Alexander Viktorovich
125310 MOSCOW (RU)**
• **BEREZIN, Andrey Alexandrovich
125368 MOSCOW (RU)**

(74) Representative: **Eisenführ Speiser
Patentanwälte Rechtsanwälte PartGmbB
Postfach 10 60 78
28060 Bremen (DE)**

(54)  **AUTOMATIC DEVICE AND METHOD FOR COMPENSATING REACTIVE COMPONENT LOSSES IN AC NETWORKS**

(57)  An automatic device for compensating losses in a consumer network on reactive component of the voltage supplied from an AC network (2), comprises: a step-up transformer (3) for increasing the value of the supplied voltage to 10-100 kilovolts, comprising a magnetic core (4), a primary winding (5) for connecting to the AC network (2) and an output secondary winding (6); a step-down transformer (7) for reducing the voltage output by the step-up transformer (3) to the value equal to the voltage supplied to the consumer, comprising a magnetic core (8), a primary winding (9) identical to the secondary winding (6) of the step-up transformer (3) and connected opposite to the secondary winding (6) of the step-up transformer (3), and a secondary winding (10) identical to the primary winding (5) of the step-up transformer (3). The opposite connected secondary winding (6) of the step-up transformer (3) and primary winding (9) of the step-down transformer (7) form a second voltage harmonic generation circuit (11) that generates, when voltage is supplied to the step-up transformer (3) from the AC network (2), a second voltage harmonic in the windings (5, 6, 9, 10) and magnetic cores (4, 8) of said transformers (3, 7) so that frequency of external voltage oscillations of the AC network (2) is doubled in said second voltage harmonic generation circuit (11), thereby generating an autoparametric resonance therein, and oscillations of the electromagnetic field strength occur on a small hysteresis loop of the magnetic core (8) of the step-down transformer (7). When an inductive load (13) of the consumer network is connected to the secondary winding (10) of the step-down transformer (7), current in the secondary winding (10) and the load (13) increases and cosφ factor decreases due to restoration of the angle between electric field strength vector E and magnetic field strength vector H to 90 degrees, which, given the autoparametric resonance, provides the transfer of oscillation energy to the main hysteresis loop of the magnetic core (8) of the step-down transformer (7), thereby compensating losses on reactive voltage component in the consumer network.

EP 3 703 212 A1

**AC NETWORK**

50 Hz 380V

CONSUMER NETWORK

FIG. 3

## Description

## Technical Field

The present invention relates to electrical engineering, and specifically, to an automatic device and method for compensating reactive component losses in AC networks.

The invention is applicable in industrial AC networks to reduce losses on reactive component that may reach 20-30% of the total load.

## Background of the Invention

Basic losses in industrial AC networks are losses on reactive component. Incomplete workload of asynchronous motors at enterprises is the main cause of losses on reactive component in industrial AC networks, which may reach 20-30% of the total load. Reactive power level of engines, generators and the network as a whole is characterized by a consumer power factor, which is defined as the ratio of consumed active power P to total power S really taken from the network, i.e. $\cos(\varphi) = P/S$.

The closer the $\cos(\varphi)$ power factor to unity, the smaller the portion of reactive power taken from the network. For induction motors, $\cos(\varphi)$ is about 0.7; for electric arc furnaces and welding transformers, $\cos(\varphi)$ is about 0.4; for tools and machines, $\cos(\varphi)$ is no more than 0.5, therefore, the most complete use of the network power is possible only with compensation for the reactive power component.

It should be noted that compensation for reactive power completely to $\cos(\varphi)=1$ is unadvisable as this may lead to overcompensation (due to variable magnitude of active power of the load and other random factors). Generally, the aim is $\cos(\varphi) =0.90\text{-}0.95$.

Reactive power can be compensated by synchronous compensators, synchronous motors, cosine capacitors, i.e. capacitor units. Currently, RPC capacitor units are widely used to compensate for reactive power, which offer several advantages over other reactive power compensation devices.

Reactive power compensation can be individual and centralized. In the former case, one or several cosine capacitors are connected in parallel with the load, while in the latter case a number of capacitors are connected to the main switchboard.

Individual compensation is the easiest and cheapest method of reactive power compensation. The number of capacitors, or capacitor banks, matches the number of loads, each capacitor being disposed directly near the respective load, e.g. adjacent to the motor. Such compensation is good only for constant loads, e.g. for one or several asynchronous motors with a constant shaft speed, i.e. where reactive power of each load in on state varies slightly over time and does not require a change in the ratings of the connected capacitor banks for its compensation. Therefore, due to constant reactive power level of the load and respective reactive power of the compensators the individual compensation is also referred to as uncontrolled compensation.

Centralized compensation is the reactive power compensation using a single controlled unit connected to the main switchboard.

Centralized compensation is used in the systems with a great number of loads having a large variation in the power factor during the day, i.e. for a variable load e.g. several motors located at a single enterprise and connected alternately. In such systems, individual compensation is unacceptable as it becomes too expensive since abundant equipment requires a great number of capacitors, and overcompensation, i.e. the appearance of overvoltage in the network, is possible.

In the case of centralized compensation, the capacitor unit comprises a specific control unit or automatic reactive power controller and switching and protection equipment, contactors and fuses. If the consumer power factor $\cos(\varphi)$ deviates from the set value, the controller connects or disconnects certain capacitor banks, i.e. compensation is accomplished stepwise. Thus, the control is automatic, and the power of the connected capacitors corresponds to the reactive power consumed at a given instant, which excludes generation of reactive power into the network and appearance of overvoltage therein.

A device for centralized compensation for reactive power in n-phase high-voltage network, providing energy saving by centralized compensation for reactive power under variable loads, is disclosed e.g. in RU 2561192 C1, (publication date August 27, 2015). The device can be used in high-voltage electrical networks with a voltage of 3 kV and higher. The device comprises a reactive power regulator, a reactive power meter, a voltage transformer, n cosine capacitor banks, each including m cosine capacitors whose first terminals are joined and connected to a common bus, n contactor blocks, each including m contactors, and further comprises n tuning cosine capacitor banks, each including k tuning cosine capacitors whose first terminals are joined and connected to a common bus, n switch blocks, each including k switches, a controller, n signal harmonic content analyzers; wherein total capacitance $C\Sigma bp$ in each of the n tuning capacitor banks is selected from relation **$C\Sigma bp=Ck$**, where Ck is the capacitance of a single capacitor in each of n cosine capacitor banks, where n, m, k>/=1.

The device operates in the following manner.

Upon variation of a load in the network and the associated variations in the nature and level of reactive power, the reactive power regulator generates respective control commands responsive to signal from the reactive power meter and sends them to contactors of the contactor blocks, and responsive to the control commands the respective set of cosine capacitors from cosine capacitor banks is connected to the set of contactors. Total reactance of the cosine capacitors connected to respective secondary winding of the transformer on each phase is transformed by a step-down transformer into a high-voltage network, thereby providing the necessary reactive power compensation. In this case a voltage resonance can occur both due to the variation in the nature of the load at consumers, and the variation of the total capacitance of the cosine capacitors connected to respective windings of the step-down transformer and forming a series circuit with them.

As active losses in the series circuit are insignificant and its Q factor is Q≥10, this can lead to a sharp rise in the voltage on the cosine capacitors and cause their failure.

To prevent series resonance and overload of the cosine capacitors, the analyzers are constantly analyzing harmonic content of the signal on the set of cosine capacitors connected to respective windings of the step-down transformer. Based on the analysis results, frequency of unwanted resonance and its power are determined. The controller evaluates the signal coming from the analyzers and, if the evaluation result reveals the need for tuning out from the unwanted resonance frequency, a control command is generated taking into account the information received from the controller about the total capacitance of the cosine capacitors connected to each of the phases. The control command is sent to switches of respective switch blocks to connect respective set of tuning cosine capacitors of the tuning cosine capacitors blocks to corresponding already connected cosine capacitors.

The device is unable to flexibly compensate for losses on reactive component at any variations in the inductive load, which varies with the load of industrial consumers.

A system for automatic compensation for reactive power and deviation of pulse-width modulated voltage on the high side of a transformer substation is disclosed e.g. in RU 2475917C1 (publication date February 20, 2013). The transformer substation comprises a power transformer with a secondary winding connected to a load, and input terminals with a cosine capacitor bank, designed for connection to the network.

The system for automatic reactive power compensation comprises a booster transformer and a converter with a DC link, which includes a regenerative rectifier with a control system, an inductive-capacitive filter and a voltage inverter with a control system synchronized with the network, as well as a reactive power sensor and a load voltage deviation sensor, and the secondary winding of the booster transformer is connected to the load via a thyristor converter with DC link.

In the system, primary windings of the power and booster transformers are in series and connected to the network, output of the reactive power sensor of the network is connected to control input of the inverter control system made with pulse-width modulation and adapted to change the direction of phase control of the inverter output voltage responsive to the control signal sign. Output of the load voltage deviation sensor is connected to control input of the active rectifier control system made with pulse-width modulation and adapted to restrict the minimum level of the rectified voltage. The DC link includes a current sensor whose output is connected to an additional control input of the active rectifier control system; furthermore, the active rectifier is adapted to regulate the phase of its input current as a rectified current, and the active rectifier control system is adapted to perform feed-forward control of the phase of its input current in the rectifier mode and feed-backward control in the inverter mode.

The booster transformer connected on the high side of the substation is controlled by a voltage amplitude and phase converter with an intermediate DC link. The inverter is fed from the load. Discrete stage of reactive power compensation is the bank of network cosine capacitors. At high inductance of the RL load the inverter operates with a leading phase to complement the action of capacitors, and at a low inductance it operates with a lagging phase to neutralize the action by the discrete stage.

However, the conventional devices are unable to flexibly compensate for losses on reactive component at any variations in the inductive load, which varies with the load of industrial consumers.

## SUMMARY OF THE INVENTION

The object of the present invention is to provide an automatic device for compensating losses in a consumer network on reactive component of the voltage supplied from the AC network, which ensures flexible compensation for reactive component losses and reduces the losses to no more than 2% of the total power consumption at any variations in the inductive load magnitude.

The further object of the present invention is to provide a method for compensating losses in a consumer network on reactive component of the voltage supplied from the AC network.

The object is attained in an automatic device for compensating losses in a consumer network on reactive component of the voltage supplied from an AC network, comprising:

a step-up transformer for increasing the value of the supplied voltage to 10-100 kilovolts, comprising a magnetic core and, arranged on the magnetic core, a primary winding for connecting to the AC network and an output secondary winding;
a step-down transformer for reducing the voltage supplied by said step-up transformer to the value equal to the voltage supplied to the consumer, comprising a magnetic core and, arranged on the magnetic core, a primary winding identical to the secondary winding of the step-up transformer and connected opposite to the secondary winding of the step-up transformer, and a secondary winding identical to the primary winding of the step-up transformer; wherein the opposite connected secondary winding of the step-up transformer and primary winding of the step-down transformer form a second voltage harmonic generation circuit that generates, when voltage is supplied to the step-up transformer from the AC network, a second voltage harmonic in the windings and magnetic cores of said transformers so that frequency of external voltage oscillations of the AC network is doubled in said second voltage harmonic generation circuit, thereby generating an autoparametric resonance therein, and oscillations of the electromagnetic field strength occur on a small hysteresis loop of the magnetic core of the step-down transformer; wherein, when an inductive load of the consumer network is connected to the secondary winding of the step-down transformer, current in the secondary winding and the load increases and $\cos\varphi$ factor decreases due to restoration of the angle between electric field strength vector E and magnetic field strength vector H to 90 degrees, which, given the autoparametric resonance, provides the transfer of oscillation energy to the main hysteresis loop of the magnetic core of the step-down transformer, thereby compensating losses on reactive voltage component in the consumer network.

The supplied voltage in the AC network is 120V, or 220V, or 380V.

Preferably, the device further comprises a load resistance to accelerate automatic adjustment of the phase angle between the electric field strength vector E and the magnetic field strength vector H, connected in series with the secondary winding of the step-down transformer.

Preferably, the load resistance value is about 100-200 Ohms.

The object is also attained by a method for compensating losses in a consumer network on reactive component of the voltage supplied from an AC network, comprising:

using an automatic device for compensating losses in a consumer network on reactive component of the voltage supplied from an AC network according to claim 1, comprising:

a step-up transformer for increasing the value of the supplied voltage to 10-100 kilovolts, and a step-down transformer for reducing the voltage output by said step-up transformer to the value equal to the voltage supplied to the consumer; wherein the opposite connected secondary winding of the step-up transformer and primary winding of the step-down transformer form a second voltage harmonic generation circuit; connecting the automatic compensation loss device according to claim 1 to an AC network, and using the automatic compensation loss device:

increasing, by the step-up transformer, the voltage supplied to the consumer from the AC network to 10-100 kilovolts, and then reducing, by the step-down transformer, the voltage output by the step-up transformer to the value equal to the voltage supplied to the consumer; wherein, when supplying voltage to the step-up transformer from the AC network, a second voltage harmonic is generated in said second voltage harmonic generation circuit so that oscillation frequency $\omega$ of the AC network voltage is doubled in said second harmonic generation circuit and autoparametric resonance with frequency $2\omega$ is generated therein, and electromagnetic field strength oscillations occur on the small hysteresis loop of the magnetic core of the step-down transformer; connecting the secondary winding of the step-down transformer to an inductive load of the consumer network, and increasing current in the secondary winding and the load and decreasing $\cos\varphi$ factor by restoration of the angle between electric field strength vector E and magnetic field strength vector H to 90 degrees, which, given the autoparametric resonance, provides the transfer of oscillation energy to the main hysteresis loop of the magnetic core of the step-down transformer, thereby compensating losses on reactive voltage component in the consumer network.

The object is also attained by an automatic device for compensating losses in a consumer network on reactive component of the voltage supplied from an AC network, comprising for each phase of a three-phase AC network:

a step-up transformer for increasing the supplied voltage to 10-100 kilovolts, comprising a magnetic core having three limbs and three primary windings disposed on each limb, respectively, for connecting to respective phase of the AC network, and three output secondary windings;

a step-down transformer for reducing the voltage output by said step-up transformer to the value equal to the voltage supplied to the consumer, said step-down transformer comprising a magnetic core having three limbs, and three primary windings disposed on each limb, respectively, identical to the three secondary windings of said step-up transformer and connected opposite to said secondary windings of the step-up transformer, and three secondary windings identical to said primary windings of the step-up transformer,

wherein the opposite connected secondary windings of the step-up transformer and respective primary windings of the step-down transformer form three second voltage harmonic generation circuits, which, when voltage is supplied to the step-up transformer from the AC network, generate a second voltage harmonic in windings and cores of said transformers so that frequency of external voltage oscillations of the AC network is doubled in said second harmonic voltage generation circuits and autoparametric resonance is generated therein, and electromagnetic field strength oscillations occur on the small hysteresis loop of the down-transformer core;

wherein, when an inductive load of the consumer network is connected to the secondary windings of the step-down transformer, current in the secondary windings and the load increases and the $\cos\varphi$ factor decreases due to restoration of the angle between electric field strength vector E and magnetic field strength vector H to 90 degrees, which, given the autoparametric resonance, provides the transfer of oscillation energy to the main hysteresis loop of the magnetic core of the step-down transformer, thereby compensating losses on reactive voltage component in the consumer network.

Preferably, the device further comprises three load resistances to accelerate automatic adjustment of the phase angle between electric field strength vector E and magnetic field vector H, each load resistance being connected in series with respective secondary winding of the step-down transformer, wherein the load resistance value is about 100-200 ohms.

The present device ensures flexible compensation for reactive component losses and reduces the losses to no more than 2% of the total power consumption from the AC network for any inductive load variations met in practice in industry.

The expected economic effect of the use of the device at enterprises that have equipment with inductive load, for example, electric drives, fans, can be 20-30% of the cost of power consumption by the enterprise per year.

**Brief Description of the Drawings**

The invention is further explained by description of preferred embodiments with reference to the accompanying drawings, in which:

Fig. 1 shows amplitude variation curves at ordinary resonance and parametric resonance, respectively;
Fig. 2 is an electrical circuit for autoparametric resonance reproduction;
Fig. 3 is an automatic device for compensating losses in a consumer network on reactive component of the voltage supplied from an AC network, according to the invention;
Fig. 4 is an electrical circuit for generating a second voltage harmonic according to the invention;
Fig. 5 shows small and large hysteresis loops of the magnetic core of a step-down transformer, formed in operation of the second voltage harmonic generation circuit.

**Theoretical Basis of the Invention**

The invention relies on the phenomenon of autoparametric resonance.

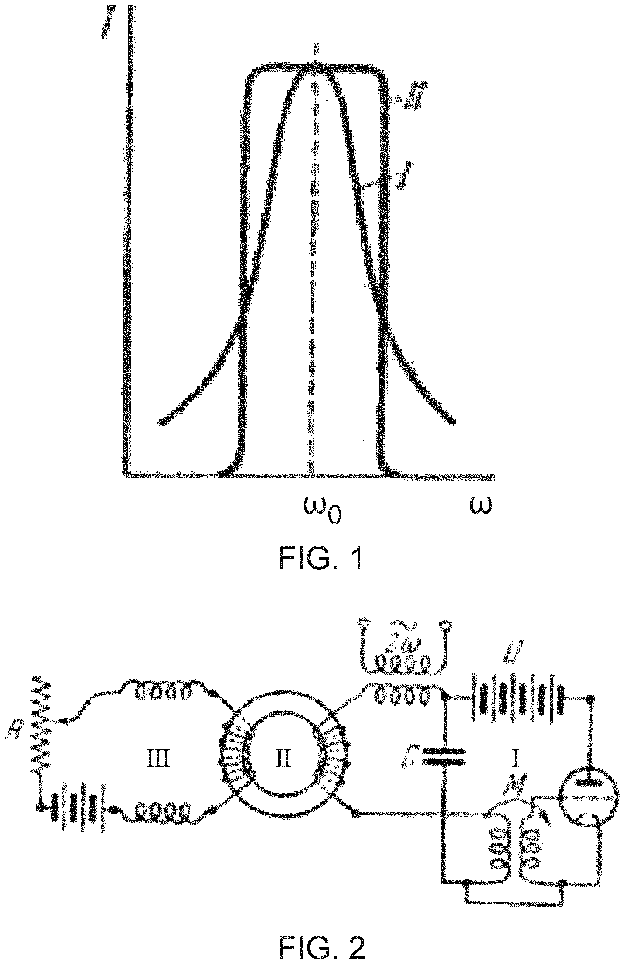

There are three types of resonance known in physics: ordinary resonance, parametric resonance, and autoparametric resonance. Ordinary resonance occurs when frequency of an external force is equal to natural frequency of the system. At ordinary resonance, a gradual variation in amplitude with frequency is observed, which causes a smooth rise and then fall of the resonance curve (curve I) (Fig. 1). At ordinary resonance, unlimited increase in amplitude is theoretically possible only in an ideal system at R=0.

Parametric resonance occurs not only with equality, but also with other ratios of parameter modulation frequencies $\omega$ and natural frequency $\Omega$ of the system, e.g. 1/2, 1, 3/2, 2 .... The source of energy spent on the parameter modulation and excitation of oscillations is an external factor. At parametric resonance (curve II), the excitation occurs in a strictly limited frequency range, and a dramatic stepwise variation in the amplitude takes place at the boundary of this range (Fig. 1). In the case of parametric resonance, given the linearity of the system, the amplitude of oscillations will grow infinitely in a system with damping as well.

As seen in Fig. 1, parametric resonance curve II has an almost rectangular shape and a small width, which can also be more or less arbitrarily adjusted within certain range by varying the parameter modulation coefficient.

At ordinary resonance the resonance curve height depends entirely (when tuned to the resonant frequency) on the magnitude of loss, while at parametric resonance the resonance curve has a rectangular shape even in the presence of loss.

An example of parametric resonance is a park swing. The range of oscillations grows especially strongly if a person bends knees at the highest points and straighten them when the swing passes through the lowest point. This is the most familiar example of parametric resonance, in which the growth of oscillations is caused by a periodic variation in the oscillation system parameter rather than by an external effect. In this case, bending and straightening of the knees periodically changes (modulates) the reduced length of the physical pendulum, which is the swing with a person thereon.

Along with parametric resonance, there is a phenomenon of autoparametric resonance, at which the oscillation energy comes from the system itself, and external effect is only a control factor.

An example of an autoparametric resonance system is two identical opposite-connected oscillating circuits. The main feature of the system is automatic adjustment of the oscillation phase in the circuits.

Autoparametric resonance can be observed in the circuit depicted in Fig. 2.

The main part of the circuit is a vacuum tube generator L, whose circuit, tuned to frequency ω, further comprises a coil with a source of variable electromotive force with frequency 2ω, and an inductor **II** with an iron magnetic core magnetized by direct current from a bank **III.**

By adjusting the bias current by a rheostat **R,** the mode of maximum variation in the inductance depending on the current in the circuit can be found. Feedback **M** of the generator part of the circuit is set so that natural oscillations cannot occur, but the oscillating system of the generator has very low attenuation. The generator can be very conveniently adjusted by varying the feedback.

At appropriate selection of system attenuation, magnetization in the inductor **II** and amplitude of voltage of modulating frequency 2ω, autoparametric oscillations with a characteristic U-shaped resonance curve appear in the system. Thus, the ferromagnetic magnetic core of the inductor **II** provides, owing to hysteresis, modulation of the inductance i.e. transition to autoparametric resonance. The shape of autoparametric resonance curve matches that of the parametric resonance curve (Fig. 1).

Instead of the ferromagnetic magnetic core used in the above circuit for modulating the inductance, modulation of capacitance can be also accomplished by using capacitors with ferroelectrics, whose the dielectric constant undergoes great variations with the electric field strength.

The above has been taken as the theoretical basis for creation of an automatic device for compensating losses on voltage reactive component cos(φ) between the main network and the consumer (by analogy with parametric systems with two degrees of freedom, comprising oscillating circuits); for this purpose it is proposed to use two transformers that form an autoparametric system in accordance with the Manley-Rowe theorem (relations (1) are given below).

One of the transformers is a step-up transformer for increasing the value of the supplied voltage to 10-100 kilovolts, which comprises a magnetic core and, arranged on the magnetic core, a primary winding for connecting to an AC network and an output secondary winding, while the other transformer is a step-down transformer for reducing the voltage from the step-up transformer to the value supplied to the consumer, which comprises a magnetic core and, arranged on the magnetic core, a primary winding identical to the secondary winding of the step-up transformer and opposite connected to the secondary winding of the step-up transformer, and a secondary winding identical to the primary winding of the step-up transformer.

The opposite connected secondary winding of the step-up transformer and primary winding of the step-down transformer form a circuit in which the frequency of external oscillations of the AC voltage is doubled and provides generation of autoparametric resonance therein.

Owing to the opposite connection of the step-up and step-down transformer windings, which are high-voltage windings, a second harmonic of the voltage supplied from the network appears, which provides, in accordance with the Manly-Rowe theorem in the "down conversion with amplification" mode, the appearance of autoparametric resonance when a load is connected to the low-voltage winding of the step-down transformer.

Transition of the circuit to a self-excited (autoparametric) mode is proportional to *cos(φ)*.

The process of automatic phase adjustment in autoparametric systems follows from the Manley-Rowe relations (1) (see e.g. 1, 2)

$$\sum_{m=0}^{\infty} \sum_{n=-\infty}^{\infty} \frac{mP_{mn}}{m\omega_1 + n\omega_2} = 0$$

$$\sum_{n=0}^{\infty} \sum_{m=-\infty}^{\infty} \frac{nP_{mn}}{m\omega_1 + n\omega_2} = 0 \qquad (1)$$

where: ω**1** - frequency of signal of the AC network,

ω**2** - frequency equal to doubled first frequency of the AC network,

$P_{mn}$ - power of oscillations with frequency $m\omega_1 + n\omega_2$,

m and n - integers.

Based on the formula (1), oscillation phase adjustment in the circuit with opposite connected windings will occur automatically in the "down conversion with amplification" mode (see e.g. Kushnir and B.A. Fersman, Theory of Nonlinear Electric Circuits, Svyaz', Moscow 1974, p. 375).

**Description of Preferred Embodiments**

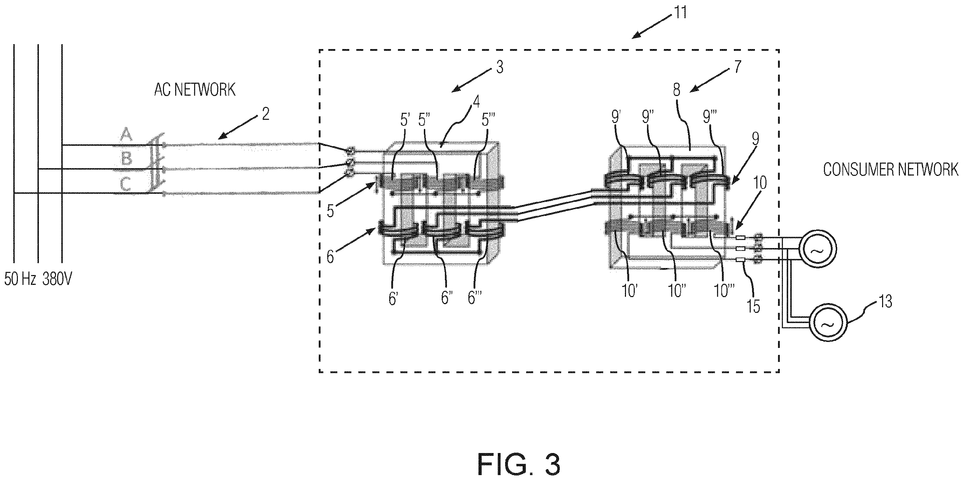

An automatic device 1 (Fig. 3) for compensating losses in a consumer network on reactive component of the voltage supplied from an AC network 2 comprises a step-up transformer 3 for increasing the supplied voltage value to 10-100 kilovolts.

The step-up transformer 3 comprises a magnetic core 4 and, arranged on the magnetic core 4, a primary winding 5 for connecting to the AC network 2, and an output secondary winding 6.

Fig. 3 shows a three-phase step-up transformer 3 with a coupled magnetic circuit connected, a magnetic core 4 of the transformer 3 in this embodiment comprises three limbs 4', 4", 4''' on which three primary windings 5', 5", 5''' are arranged for each phase A, B, C of the AC network, respectively, and output secondary windings 6', 6", 6'" for each phase, respectively. A three-phase transformer with an uncoupled magnetic circuit (not shown) can be used.

The device 1 further comprises a step-down transformer 7 for reducing the voltage output by the step-up transformer 3 to the value equal to the voltage supplied to the consumer. The step-down transformer 7 comprises a magnetic core 8 and, arranged on the magnetic core 8, a primary winding 9 identical to the secondary winding 6 of the step-up transformer 3 and opposite connected to the secondary winding 6 of the step-up transformer 3, and a secondary winding 10 identical to the primary winding 5 of the step-up transformer 3.

Fig. 3 shows a three-phase step-down transformer 7 with a coupled magnetic circuit, a magnetic core 8 of which in this embodiment comprises three limbs 8', 8", 8'", on which three primary windings 9', 9", 9'" are arranged for each phase A, B, C of the AC network, respectively, and output secondary windings 10', 10", 10'" for each phase, respectively. A three-phase transformer with an uncoupled magnetic circuit (not shown) can be used.

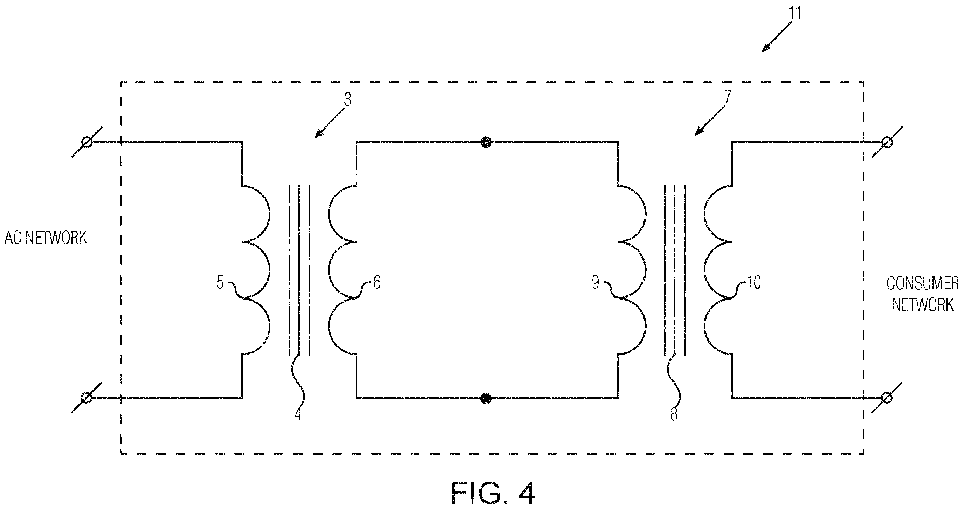

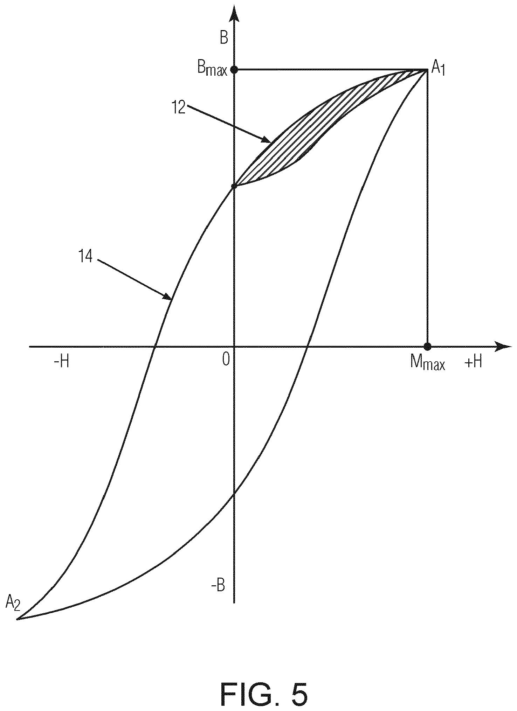

The opposite connected secondary windings 6 of the step-up transformer 3 and primary windings 9 of the step-down transformer 7 in each phase form a second voltage harmonic generation circuit 11 (Fig. 4), in which, when voltage is supplied to the step-up transformer 3 from an AC network 2, a second voltage harmonic is generated in magnetic cores and windings of the transformers 3 and 7 so that frequency of external oscillations of the AC network 2 is doubled in the second voltage harmonic generation circuit 11 and provides generation of autoparametric resonance therein, and electromagnetic field strength oscillations occur on a small hysteresis loop 12 (Fig. 5) of the step-down transformer magnetic core.

When an inductive load 13 of the consumer network, for example, an electric motor, is connected to the secondary winding 10 of the step-down transformer 7 (Fig. 3), current in the secondary winding 10 and the inductive load 13 increases and $\cos\varphi$ factor decreases due to restoration of the angle between electric field strength vector E and magnetic field strength vector H to 90 deg., which, given the autoparametric resonance, ensures the transfer of the oscillation energy to the main hysteresis loop 14 of the magnetic core of the step-down transformer 7, thereby compensating losses on voltage reactive component in the consumer network.

The supplied voltage in the AC network is 120V, or 220V, or 380V.

The device further comprises a load resistance 15 with a value of about 100-200 Ohms in the circuit of each secondary winding of a step-down transformer, the load resistance 15 being designed to accelerate automatic adjustment of the phase angle between electric field strength vector E and magnetic field strength vector H.

A method of compensating losses in a consumer network on reactive component of the voltage supplied from an AC network is disclosed in terms of a three-phase AC network 2.

The method is implemented using an automatic device 1 for compensating losses in a consumer network on reactive component of the voltage supplied from a three-phase AC network 2.

The automatic loss compensation device 1 is connected to the AC network 2; to this end, terminals of windings 5', 5", 5'" of a step-up transformer 3 are connected to respective phases A, B, C of the network 2, and the voltage supplied to the consumer from the AC network is increased up to 10-100 kilovolts.

Then, the voltage output by the step-up transformer 3 is reduced by a step-down transformer 7 to the value equal to the voltage supplied to the consumer, for example, 380 V.

When voltage is supplied to the step-up transformer 3 from the AC network 2, a second voltage harmonic is generated in a second voltage harmonic generation circuit 11 so that frequency ω of external voltage oscillations of the AC network is doubled in the second voltage harmonic generation circuit 11 and provides generation of autoparametric resonance with frequency 2ω therein. And electromagnetic field strength oscillations occur on a small hysteresis loop 12 of the step-down transformer magnetic core.

Secondary windings 10', 10", 10'" of the step-down transformer 7 are connected to an inductive load 13 of the consumer network, while increasing current in the secondary winding 10', 10", 10'" and the load 13 and reducing $\cos\varphi$ factor owing to restoration of the angle between electric field strength vector E and magnetic field strength vector N to 90 degrees, which, given the autoparametric resonance, ensures the transfer of the oscillation energy to a main loop 14 of hysteresis of the magnetic core of the step-down transformer 7, thereby compensating losses on reactive component of the voltage in the consumer network.

**Industrial Applicability**

The present automatic device for compensating losses in a consumer network on reactive component of the voltage supplied from the AC network can be used to provide flexible compensation for losses on reactive component and reduce the losses to no more than 2% of the total power consumption at any variations in the inductive load, and the economic effect of the use of the present device at enterprises having equipment with inductive load, for example, electric motors, fans, can reach 20-30% of the cost of power consumption by this enterprise per year.

**Claims**

1.  An automatic device for compensating losses in a consumer network on reactive component of the voltage supplied from an AC network, comprising:

a step-up transformer for increasing the value of the supplied voltage to 10-100 kilovolts, comprising a magnetic core and, arranged on the magnetic core, a primary winding for connecting to the AC network and an output secondary winding;

a step-down transformer for reducing the voltage output by said step-up transformer to the value equal to the voltage supplied to the consumer, comprising a magnetic core and, arranged on the magnetic core, a primary winding identical to the secondary winding of the step-up transformer and connected opposite to the secondary winding of the step-up transformer, and a secondary winding identical to the primary winding of the step-up transformer;

wherein the opposite connected secondary winding of the step-up transformer and primary winding of the step-down transformer form a second voltage harmonic generation circuit that generates, when voltage is supplied to the step-up transformer from the AC network, a second voltage harmonic in windings and magnetic cores of said transformers so that frequency of external voltage oscillations of the AC network is doubled in said second voltage harmonic generation circuit, thereby generating an autoparametric resonance therein, and oscillations of the electromagnetic field strength occur on a small hysteresis loop of the magnetic core of the step-down transformer;

wherein when an inductive load of the consumer network is connected to the secondary winding of the step-down transformer, current in the secondary winding and the load increases and $\cos\varphi$ factor decreases due to restoration of the angle between electric field strength vector E and magnetic field strength vector H to 90 degrees, which, given the autoparametric resonance, provides the transfer of oscillation energy to the main hysteresis loop of the magnetic core of the step-down transformer, thereby compensating losses on reactive voltage component in the consumer network.

2. A device according to claim 1, wherein the supplied voltage in the AC network is 120V, or 220V, or 380V.

3. A device according to claim 1, further comprising a load resistance to accelerate automatic adjustment of the phase angle between electric field strength vector E and magnetic field strength vector H, connected in series with the secondary winding of the step-down transformer.

4. A device according to claim 3, wherein the load resistance value is about 100-200 Ohms.

5. A method for compensating losses in a consumer network on reactive component of the voltage supplied from an AC network, comprising:
using an automatic device for compensating losses in a consumer network on reactive component of the voltage supplied from an AC network according to claim 1, comprising:

a step-up transformer for increasing the value of the supplied voltage to 10-100 kilovolts, and a step-down transformer for reducing the voltage supplied by said step-up transformer to the value equal to the voltage supplied to the consumer; wherein opposite connected secondary winding of the step-up transformer and primary winding of the step-down transformer form a second voltage harmonic generation circuit;

connecting the automatic compensation loss device according to claim 1 to an AC network, and by the automatic compensation loss device:

increasing, by the step-up transformer, the voltage supplied to the consumer from the AC network to 10-100 kilovolts, and then reducing, by the step-down transformer, the voltage output by the step-up transformer to the value equal to the voltage supplied to the consumer;

wherein, when supplying voltage to the step-up transformer from the AC network, a second voltage harmonic is generated in said second voltage harmonic generation circuit so that oscillation frequency $\omega$ of the AC network voltage is doubled in said second harmonic generation circuit, and autoparametric resonance with frequency $2\omega$ is generated therein, while electromagnetic field strength oscillations occur on the small hysteresis loop of the magnetic core of the step-down transformer;

connecting the secondary winding of the step-down transformer to an inductive load of the consumer network, and increasing current in the secondary winding and the load and decreasing $\cos\varphi$ factor by restoration of the angle between electric field strength vector E and magnetic field strength vector H to 90 degrees, which, given the autoparametric resonance, provides the transfer of oscillation energy to the main hysteresis loop of the magnetic core of the step-down transformer, thereby compensating losses on reactive voltage component in the consumer network.

6. A method according to claim 5, wherein the supplied

ance, provides the transfer of oscillation energy to the main hysteresis loop of the magnetic core of the step-down transformer, thereby compensating losses on reactive voltage component in the consumer network.

10. A device according to claim 9, further comprising three load resistances to accelerate automatic adjustment of the phase angle between electric field strength vector E and magnetic field vector H, each load resistance being connected in series with respective secondary winding of the step-down transformer.

11. A device according to claim 10, wherein the load resistance value is about 100-200 ohms.

voltage in the AC network is 120V, or 220V, or 380V.

7. A method according to claim 4, further comprising using a load resistance to accelerate automatic adjustment of the phase angle between electric field strength vector E and magnetic field strength vector H, said load resistance being connected in series with the secondary winding of the step-down transformer.

8. A method according to claim 7, wherein the load resistance is about 100 ohms.

9. An automatic device for compensating losses in a consumer network on reactive component of the voltage supplied from an AC network, comprising for each phase of a three-phase AC network:

a step-up transformer for increasing the supplied voltage to 10-100 kilovolts, comprising a magnetic core having three limbs and three primary windings disposed on each limb, respectively, for connecting to respective phase of the AC network, and three output secondary windings;
a step-down transformer for reducing the voltage output by said step-up transformer to the value equal to the voltage supplied to the consumer, said step-down transformer comprising a magnetic core having three limbs, and three primary windings disposed on each limb, respectively, identical to the three secondary windings of said step-up transformer and connected opposite to said secondary windings of the step-up transformer, and three secondary windings identical to said primary windings of the step-up transformer,
wherein the opposite connected secondary windings of the step-up transformer and respective primary windings of the step-down transformer form three second voltage harmonic generation circuits, which, when voltage is supplied to the step-up transformer from the AC network, generate a second voltage harmonic in windings and cores of said transformers so that frequency of external voltage oscillations of the AC network is doubled in said second harmonic voltage generation circuits and autoparametric resonance is generated therein, and electromagnetic field strength oscillations occur on the small hysteresis loop of the down-transformer core;
wherein, when an inductive load of the consumer network is connected to the secondary windings of the step-down transformer, current in the secondary windings and the load increases and cosφ factor decreases due to restoration of the angle between electric field strength vector E and magnetic field strength vector H to 90 de-

**10**

FIG. 1

FIG. 2

FIG. 3

AC NETWORK

50 Hz 380V

CONSUMER NETWORK

EP 3 703 212 A1

FIG. 4

FIG. 5

Europäisches
Patentamt

European
Patent Office

Office européen
des brevets

# EUROPEAN SEARCH REPORT

Application Number

EP 20 15 9318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/319474 A1 (CHUNG CAMERON K [CA]) 20 December 2012 (2012-12-20) * paragraph [0028]; figures 1-2 * | 1-11 | INV. H02J3/18 H01F27/34 H01F38/16 |
| A | EDOUARD THIBAUT ET AL: "Use of liquid filled motor for subsea pump applications", PCIC EUROPE 2010 CONFERENCE RECORD, IEEE, PISCATAWAY, NJ, USA, 15 June 2010 (2010-06-15), pages 1-8, XP031717641, ISBN: 978-1-4244-6968-0 * figure 10 * | 1-11 | |
| A | JP 2012 100515 A (TOKYO ELECTRIC POWER CO; MURORAN INST TECH) 24 May 2012 (2012-05-24) * paragraph [0026]; figures 3a,3b * | 3,4,7,8, 10,11 | |

TECHNICAL FIELDS
SEARCHED      (IPC)

H02J
H01F

The present search report has been drawn up for all claims

| Place of search | Date of completion of the search | Examiner |
|---|---|---|
| Munich | 2 June 2020 | Varela Fraile, Pablo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 9318

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2020

| Patent document cited in search report | | Publication date | Patent family member(s) | Publication date |
|---|---|---|---|---|
| US 2012319474 | A1 | 20-12-2012 | NONE | |
| JP 2012100515 | A | 24-05-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2561192 C1

- RU 2475917 C1

**Non-patent literature cited in the description**

- **KUSHNIR ; B.A. FERSMAN.** Theory of Nonlinear Electric Circuits, Svyaz. 1974, 375